# EUROPEAN PATENT APPLICATION

(11) **EP 4 542 272 A1**
(43) Date of publication of application: **23.04.2025**
(21) Application number: 23822806.8
(22) Date of filing: 27.04.2023
(51) Int. Cl.: G02B 6/26, G02B 6/12

(54) **OPTICAL SPLITTER DEVICE, OPTICAL CHIP AND OPTICAL COMMUNICATION MODULE**

(30) Priority: 17.06.2022 CN 202210686523
(71) Applicant: Innolight Technology (Suzhou) Ltd., Suzhou, Jiangsu 215000 (CN)
(72) Inventor: WU, Hao, Suzhou, Jiangsu 215000 (CN); TENG, Min, Suzhou, Jiangsu 215000 (CN); ZHENG, Xuezhe, Suzhou, Jiangsu 215000 (CN)
(74) Representative: Becker, Eberhard
(86) International application number: PCT/CN2023/091046
(87) International publication number: WO 2023/241235

(57) **Abstract**

An optical splitter device, an optical chip, and an optical communication module. The optical splitter device is used to provide a multi-path light source for a multi-path parallel system (200), and comprises multiple edge coupling structures (110). A mode field formed by joint action of first ends of the edge coupling structures (110) matches an optical fiber mode field, such that incident light transmitted by optical fiber (20) is split into multiple light sources. A second end of each edge coupling structure (110) is used to connect to the multi-path parallel system (200), thereby providing light sources for the multi-path parallel system (200). When light is split by the optical chip, limitations in operating wavelength range and excess loss caused by using a conventional optical splitter can be effectively avoided.

## Description

### BACKGROUND

This application claims the priority benefit of China application serial no. 202210686523.0, filed on June 17, 2022 and entitled "OPTICAL SPLITTER DEVICE, OPTICAL CHIP AND OPTICAL MODULE." The entirety of the above-mentioned patent application is hereby incorporated by reference herein and made a part of this specification.

### Technical Field

The application relates to the field of optical communication technology, and in particular to an optical splitter device, an optical chip, and an optical module.

### Description of Related Art

With the development of the Internet, the emergence of massive content, and the deployment and application of 5G networks, the requirements for communication speed and capacity grow, and the requirements for performance and costs of the optical communication modules also increase. To save costs, one laser device is used most of the time to provide the light source for a multi-path parallel system.

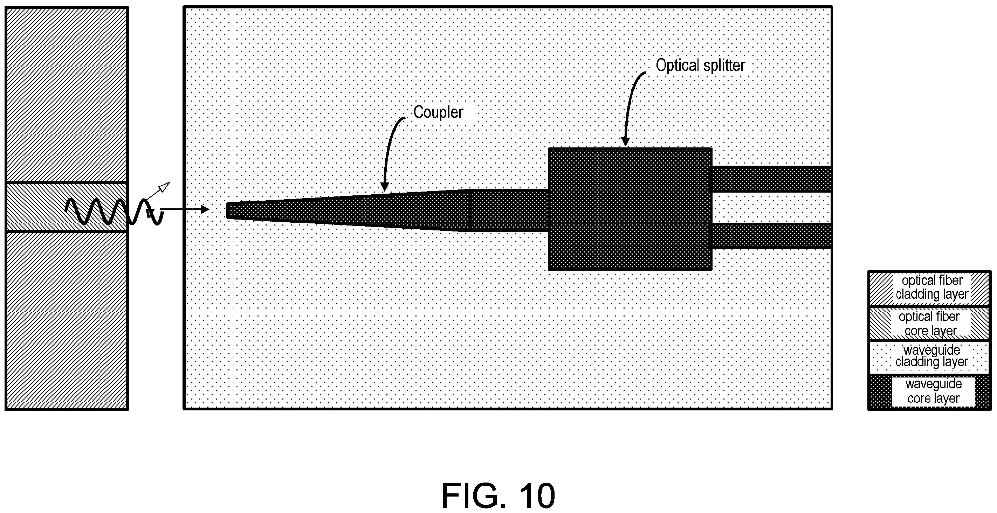

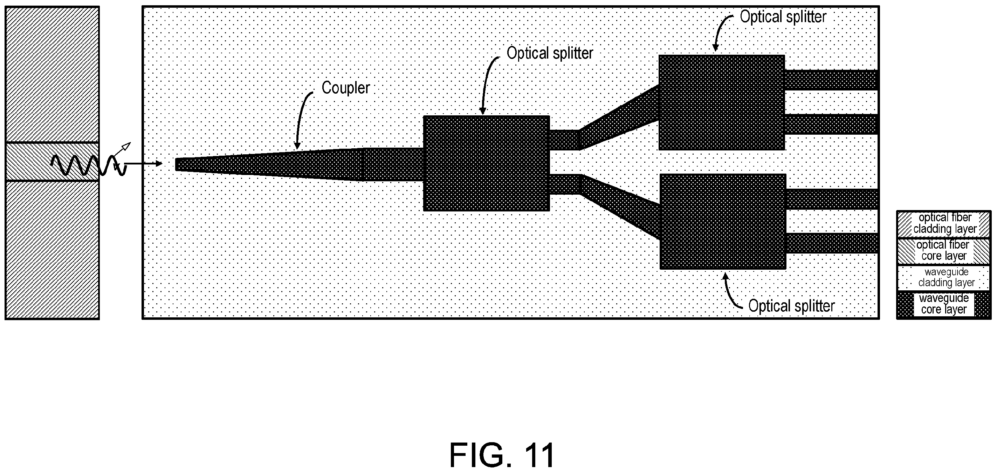

As shown in FIG. 10 and FIG. 11, in the related art, the solution for a laser device on an optical chip to provide a light source for a multi-path signal is to first couple the laser to the optical chip through an edge coupler, and then split the light source into 2 paths / 4 paths through a 1^{st}/2^{nd} level optical splitter. In this design, the optical splitter has a specific operating wavelength range limitation. When the wavelength of the beam entering the optical splitter is at the edge of this range, greater loss is introduced.

### SUMMARY

### Technical Problems

Based on the above, the embodiments of the application provide an optical splitter device, an optical chip, and an optical communication module to avoid the limitation in the operating wavelength range and excess loss caused by the use of an optical splitter.

### Technical Solutions

An optical splitter device is used to provide a multi-path light source for a multi-path parallel system and includes:
a plurality of edge coupling structures, a mode field formed by joint action of first ends of the edge coupling structures matching an optical fiber mode field, such that incident light transmitted by the optical fiber is split into a plurality of light sources, a second end of each edge coupling structure is used to connect to the multi-path parallel system to provide the light sources for the multi-path parallel system.

In one of the embodiments, the plurality of edge coupling structures include a first-type coupling structure, and a second end of the first-type coupling structure is used to directly connect to the multi-path parallel system.

In one of the embodiments, the plurality of edge coupling structures include second-type coupling structures, a first beam-combining structure is provided between two adjacent second-type coupling structures, and a first end of the first beam-combining structure is located between the two adjacent second-type coupling structures and is used to combine light sources emitted from second ends of the two adjacent second-type coupling structures.

In one of the embodiments, a second end of the first beam-combining structure is used to connect to the multi-path parallel system to provide it with a beam-combined light source.

In one of the embodiments, the optical splitter device further includes a second beam-combining structure, a first end of the second beam-combining structure is located between two adjacent first beam-combining structures to combine light sources emitted by the two adjacent first beam-combining structures, and a second end of the second beam-combining structure is used to connect to the multi-path parallel system to provide it with a beam-combined light source.

In one of the embodiments, the plurality of edge coupling structures include a third-type coupling structure including a coupling portion and a beam-combining portion, the coupling portion is used to form the mode field that matches the optical fiber mode field through joint action with other edge coupling structures, and the beam-combining portion is located between two adjacent edge coupling structures to perform beam combining on light sources emitted by the two and is used to connect to the multi-path parallel system.

In one of the embodiments,
the number of the edge coupling structures is an even number, and the edge coupling structures are symmetrically arranged on both sides of a fiber core of the optical fiber, or
the number of the edge coupling structures is an odd number, one of the edge coupling structures is opposite to the fiber core of the optical fiber, and the remaining edge coupling structures are symmetrically arranged on both sides of the fiber core of the optical fiber.

In one of the embodiments, the edge coupling structures have same shapes and sizes and are arranged in parallel and at equal intervals.

An optical chip, including:
a multi-path parallel system; and
the optical splitter device according to any one of the above.

An optical communication module, including:
a laser device used to emit laser;
an optical fiber connected to the laser device and used to transmit the laser emitted by the laser device; and
an optical chip including the optical splitter device according to any one of the above.

### Beneficial Effects

Regarding the optical splitter device, the optical chip, and the optical communication module, different from the conventional method of coupling the incident light through an edge coupler and then splitting it through an optical splitter, by matching the mode field formed by joint action of the first ends of the edge coupling structures 110 with the optical fiber mode field, the incident light is coupled to the optical chip and is split at the same time, so that an optical splitter is no longer needed, and limitation in the operating wavelength range and excess loss caused by the use of an optical splitter are avoided.

### BRIEF DESCRIPTION OF THE DRAWINGS

To make the technical solutions provided in the embodiments of the application or the related art more clearly illustrated, several accompanying drawings required by the embodiments or the related art for description are briefly introduced as follows. Obviously, the drawings in the following description are merely some embodiments of the application, and for a person having ordinary skill in the art, other drawings can be obtained based on these drawings without an inventive effort.
FIG. 1 is a module block diagram of an optical communication module provided in one embodiment.
FIG. 2 is a schematic diagram of a relevant structure of an optical chip provided in one embodiment.
FIG. 3 to FIG. 9 are schematic diagrams of related structures of optical splitter devices provided in different embodiments.
FIG. 10 and FIG. 11 are schematic diagrams of light splitting methods of optical chips in the related art.

Description of Reference Numerals: 10- laser device, 20- optical fiber, 21- fiber core, 22- optical fiber cladding layer, 30- optical chip, 100- optical splitter device, 110- edge coupling structure, 111- first-type coupling structure, 112- second-type coupling structure, 113- third-type coupling structure, 120- first beam-combining structure, 130- second beam-combining structure, 140- waveguide cladding layer, 200- multi-path parallel system.

### DESCRIPTION OF THE EMBODIMENTS

To facilitate understanding of the application, the application will be described more comprehensively below with reference to the relevant accompanying drawings. The embodiments of the application are illustrated in the accompanying drawings. However, the application can be implemented in many different forms and is not limited to the embodiments described herein. On the contrary, the purpose of providing these embodiments is to make the disclosed content of the application more thorough and comprehensive.

The terms used herein in the specification of the application are for the purpose of describing specific embodiments only, and are not intended to limit the application.

It shall be understood that when an element or a layer is referred to as being "on", "adjacent to", "connected to", or "coupled to" another element or layer, it means that the element or layer can be directly on, adjacent to, connected to, or coupled to another element or layer, or it means that an intervening element or layer may be present. In contrast, when an element is referred to as being "directly on", "directly adjacent to", "directly connected to", or "directly coupled to" another element or layer, it means that there is no intervening element or layer present.

It shall be understood that although the terms first, second, third, etc. may be used to describe various elements, components, regions, layers, doping types, and/or sections, these elements, components, regions, layers, doping types, and/or sections shall not be limited by these terms. These terms are only used to distinguish one element, component, region, layer, doping type, or section from another element, component, region, layer, doping type, or section.

Spatial relationship terms, such as "under", "below", "underlying", "beneath", "on", "above", etc., may be used herein to describe the relationship of one element or feature to other elements or features shown in the drawings. It should be understood that the spatially relative terms encompass different orientations of the device in use and operation in addition to the orientation depicted in the drawings. For instance, if the device in the drawings is turned over, elements or features described as "below", "under", or "beneath" other elements or features would then be oriented "above" the other elements or features. Therefore, the exemplary terms "below" and "under" may include both upper and lower orientations. In addition, the device may be otherwise oriented (e.g., rotated 90 degrees or at other orientations), and the spatial descriptors used herein are interpreted accordingly.

As used herein, the singular forms "a", "an", and "the" may include the plural forms as well, unless the context clearly dictates otherwise. It should also be understood that the terms "including/comprising" or "having" and the like designate the presence of stated features, integers, steps, operations, components, portions, or combinations thereof, but do not exclude the possibility of the presence or addition of one or more other features, integers, steps, operations, components, portions, or a combination thereof. Further, in the specification, the term "and/or" includes any and all combinations of the associated listed items.

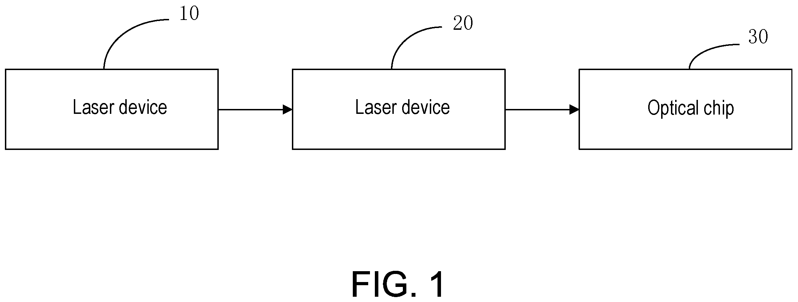

In an embodiment, with reference to FIG. 1, an optical communication module including a laser device 10, an optical fiber 20, and an optical chip 30 is provided. In addition, the optical communication module may also include an electrical chip, a controller, a printed circuit board, etc.

The laser device 10 emits laser to the optical chip through the optical fiber, so as to provide a light source for a multi-path parallel system on the optical chip. The optical communication module may include a direct modulation and direct detection optical module, a coherent optical module, a co-sealed optical module, etc.

To be specific, a single laser device may be arranged to provide highest possible output power.

At this point, for the direct modulation and direct detection optical module, a transmission distance may be increased by increasing the power of the laser device. For the coherent optical module, the optical power at a transmitting end may be increased by increasing the power of the laser device, and sensitivity of a receiving end may also be improved to obtain more transmission link budget. For the co-sealed optical module, one laser device may be used to provide light sources for as many signals as possible, so as to reduce optical port density of a package and reduce costs.

The optical fiber 20 is connected to the laser device 10 to transmit the laser emitted by the laser device. To be specific, the optical fiber may include a fiber core 21 and an optical fiber cladding layer 22, and the fiber core may transmit light. The optical fiber cladding layer wraps around the fiber core, may provide a reflective surface or optical isolation, and also provides a certain degree of mechanical protection.

The optical chip 30 may be but not limited to a silicon optical chip.

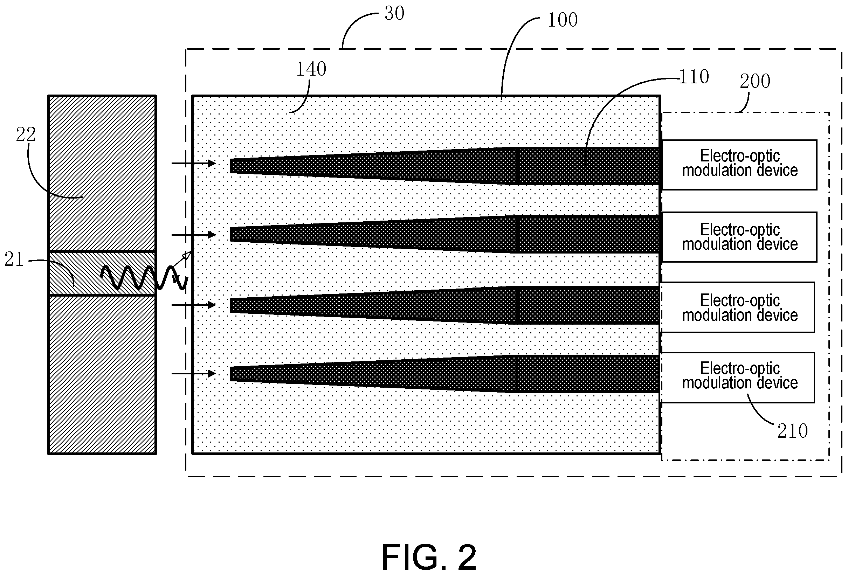

In an embodiment, with reference to FIG. 2, the optical chip 30 includes an optical splitter device 100 and a multi-path parallel system 200. The optical splitter device 100 is used to split incident light transmitted by the optical fiber to the optical chip, so as to provide a multi-path light source for the multi-path parallel system 200.

As an example, the multi-path parallel system 200 may include a plurality of electro-optic modulation devices 210. The electro-optic modulation device 210 is used to modulate an optical signal. Each electro-optic modulation device 210 needs a light source. The optical chip 100 is used to provide a light source for each electro-optic modulation device 210.

In an embodiment, with reference to FIG. 2 again, an optical splitter device 100 for providing a multi-path light source for a multi-path parallel system 200 is provided. The optical splitter device 100 includes a plurality of edge coupling structures 110. Herein, "plurality" means two or more than two. The number of the edge coupling structures 110 may be the same as or different from the number of signal paths of the multi-path parallel system 200, and there is no limitation thereto.

In addition, the optical splitter device 100 may further include a waveguide cladding layer 140, and the waveguide cladding layer 140 covers and wraps waveguide structures such as the edge coupling structures 110 in the optical splitter device 100.

As an example, the edge coupling structures 110 may include inverted tapered structures. The width of each inverted tapered structure gradually increases in an incident direction of light. At its tip (first end), its width is smallest and its ability to confine a light field becomes weaker, making it easier to match an optical fiber mode field. Certainly, the shape of the edge coupling structures 110 is not limited thereto.

A mode field formed by the first ends of the edge coupling structures 110 by joint action matches the optical fiber mode field, so that each edge coupling structure 110 obtains a beam of light source. At this point, each edge coupling structure 110 also splits the incident light transmitted by the optical fiber to form multiple light sources during coupling.

Further, a second end of each edge coupling structure 110 connects to the multi-path parallel system 200 to provide the multi-path light source for the multi-path parallel system 200. For instance, the multi-path light source is provided for the multiple electro-optic modulation devices 210.

To be specific, the second end of each edge coupling structure 110 may directly connect to the multi-path parallel system 200 or may indirectly connect to the multi-path parallel system 200, and there is no limitation thereto.

In this embodiment, different from the conventional method of coupling the incident light through an edge coupler and then splitting it through an optical splitter, by matching the mode field formed by joint action of the first ends of the edge coupling structures 110 with the optical fiber mode field, the incident light is coupled to the optical chip and is split at the same time, so that an optical splitter is no longer needed, and limitation in an operating wavelength range and excess loss caused by the use of an optical splitter are avoided.

Further, when the power of the incident light provided by the laser device is large, it may cause damage to the optical chip. To be specific, a silicon optical chip is taken as an example for explanation. First, a silicon material has two-photon absorption effect (TPA) in the communication band. As the light field density in the material increases, the TPA effect may increase exponentially, the light absorbed by the silicon material is converted into heat and damages the silicon optical chip after reaching a specific threshold, making it unable to work properly. Further, the defect energy levels formed by lattice mismatch at the interface between the core layer and the cladding layer of the silicon optical waveguide absorb light in the communication band and generate heat in the local area. When the light intensity is excessively high and the heat generated reaches the damage threshold, the silicon optical chip is damaged and cannot work properly. Further, during the processing of the silicon optical chip, there may be material defects, residues, and dirt. These imperfections may melt when exposed to high-intensity laser light, causing excessive loss in the optical path and ultimately rendering the chip inoperable.

In this case, the conventional method is to couple the incident light through an edge coupler before the optical splitter splits it. The high-power incident light emitted by the laser device is applied to the edge coupler, making it vulnerable to damage, so that the optical chip has a smaller high-intensity damage threshold. To be specific, for instance, edge couplers on silicon optical chips usually adopt an inverted tapered structure design. At this point, when the incident light intensity is large, there are three weak areas: ① the front end of the inverted tapered waveguide, where it first contacts the incident light. Because there are many silicon-silicon dioxide interfaces here and the tip is prone to defects during processing, when the incident light intensity increases, this area is very likely to have defects and be lost. ② In the section of waveguide from the inverted tapered tip to the single-mode waveguide connected to the rear end, the position of the light intensity at the edge of the waveguide is the strongest at the silicon-silicon dioxide interface in this area, and the absorption caused by the defect energy level is the strongest. Therefore, when the incident light intensity is large, local heat is high and damage may thus occur. ③ In the section of waveguide from the inverted tapered tip to the single-mode waveguide connected to the rear end, the position where the light field distribution inside the silicon waveguide is the strongest, and thus the two-photon absorption herein is the strongest. Therefore, when the incident light intensity increases, excessive local heating may easily lead to damage.

In this embodiment, the mode field formed by the first ends of the multiple edge coupling structures 110 by joint action matches the optical fiber mode field, so that each edge coupling structure 110 shares the incident light intensity, and that the optical chip may receive incident light with greater light intensity, that is, the high-intensity damage threshold of the optical chip may be improved.

In an embodiment, the number of edge coupling structures 110 is an even number. At this point, the edge coupling structures are symmetrically arranged on both sides of the fiber core 21 of the optical fiber, so that the design of the edge coupling structures 110 and mode field matching with the optical fiber are facilitated.

Alternatively, the number of the edge coupling structures 110 is an odd number. At this point, one of the edge coupling structures 110 is disposed opposite to the fiber core 21 of the optical fiber, and the other edge coupling structures 110 are symmetrically arranged on both sides of the fiber core 21 of the optical fiber, so that the design of the edge coupling structures 110 and mode field matching with the optical fiber are facilitated.

Meanwhile, as an example, the edge coupling structures 110 may be designed to have the same shape and size and be arranged in parallel and at equal intervals. At this point, the multiple edge coupling structures 110 may split the incident light to form multiple light sources with equal power.

Certainly, the design of each edge coupling structure 110 is not limited thereto. For example, in other embodiments, the shapes and sizes of the edge coupling structures 110 may also be different, so that different edge coupling structures 110 can split light to obtain light sources of different powers. At this point, the edge coupling structures 110 on both sides of the fiber core 21 of the optical fiber may also be asymmetrical, and so on.

In an embodiment, the multiple edge coupling structures 110 include a first-type coupling structure 111. A second end of the first-type coupling structure 111 is used to directly connect to the multi-path parallel system 200 (for example, directly connect to one electro-optic modulation device). That is, for the first-type coupling structure 111, after coupling and splitting the incident light together with other edge coupling structures, an acquired light beam is directly used as a light source of the multi-path parallel system 200, so that loss is effectively reduced.

It can be understood that in the embodiments of the application, the multiple edge coupling structures 110 may include only the first-type coupling structure 111 or may include both the first type of coupling structure 111 and other types of edge coupling structures 110.

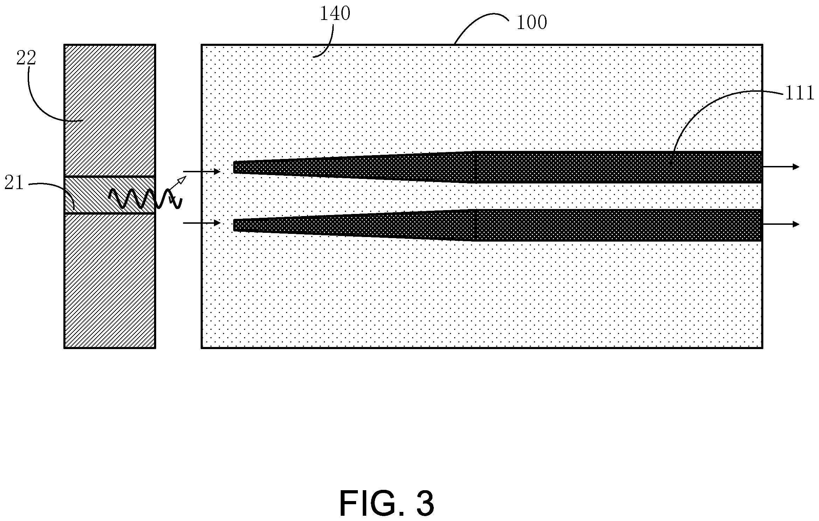

To be specific, as an example, with reference to FIG. 3, the optical splitter device 100 includes two parallel first-type coupling structures 111, and the two first-type coupling structures 111 are arranged on two sides of the fiber core 21 of the optical fiber. The mode field formed by the two first-type coupling structures 111 together matches the optical fiber mode field, and the two first-type coupling structures 111 transmit the incident light together and divide the incident light into two beams with equal power to provide two light sources for the multi-path parallel system 200 (for example, provide two light sources for two electro-optic modulation devices 210). Herein, the high-intensity damage threshold of the optical chip is approximately 3dB higher than that of the conventional design.

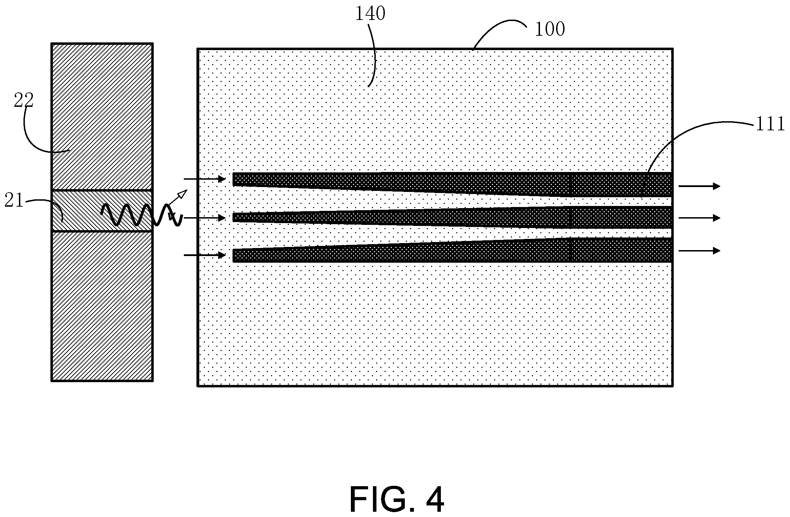

As another example, with reference to FIG. 4, the optical splitter device 100 includes three parallel first-type coupling structures 111. Among the three first-type coupling structures 111, one is opposite to the fiber core 21 of the optical fiber, and the other two are arranged on both sides of the optical fiber core 21. The mode field formed by the three first-type coupling structures 111 together matches the optical fiber mode field, and the three first-type coupling structures 111 transmit the incident light together and divide the incident light into three beams with equal power to provide three light sources for the multi-path parallel system 200 (for example, provide three light sources for three electro-optic modulation devices 210). Herein, the high-intensity damage threshold of the optical chip is approximately 4.77dB higher than that of the conventional design.

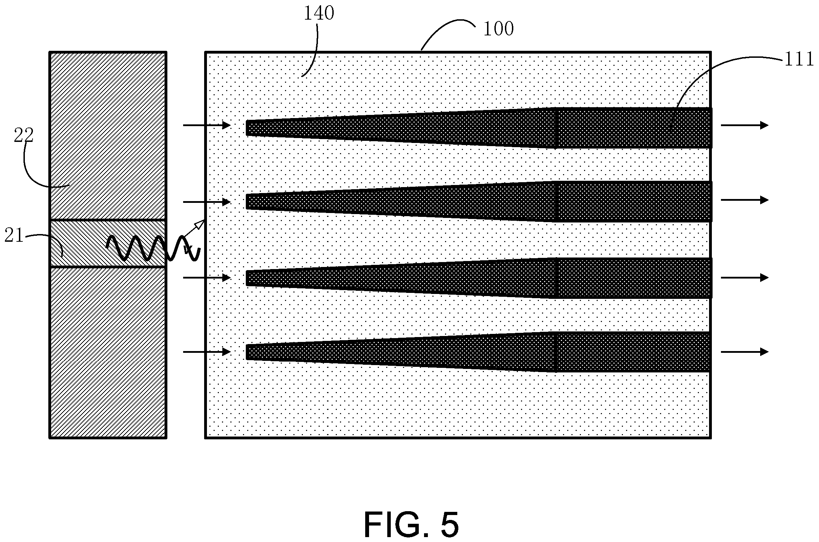

As another example, with reference to FIG. 5 or FIG. 2 (FIG. 5 is a schematic diagram related to the optical splitter device in FIG. 2), the optical splitter device 100 includes four parallel first-type coupling structures 111. The four first-type coupling structures 111 are arranged on both sides of the optical fiber core 21. The mode field formed by the four first-type coupling structures 111 together matches the optical fiber mode field, and the four first-type coupling structures 111 transmit the incident light together and divide the incident light into four beams with equal power to provide four light sources for the multi-path parallel system 200 (for example, provide four light sources for four electro-optic modulation devices 210). Herein, the high-intensity damage threshold of the optical chip is approximately 6dB higher than that of the conventional design.

In an embodiment, the multiple edge coupling structures 110 include second-type coupling structures 112, and a first beam-combining structure 120 is provided between two adjacent second-type coupling structures 112.

A first end of the first beam-combining structure 120 is located between the two adjacent second-type coupling structures 112 and is used to combine light sources emitted from second ends of the two adjacent second-type coupling structures 112.

At this point, split light beams of the second-type coupling structures 112 may be integrated, so as to facilitate application in the multi-path parallel system 200 with different power requirements.

It can be understood that in the embodiments of the application, the multiple edge coupling structures 110 may include only the second-type coupling structures 112 or may include both the second-type coupling structures 112 and the first type of coupling structure 111.

In an embodiment, a second end of the first beam-combining structure 120 may be used to connect to the multi-path parallel system 200 to provide it with a beam-combined light source. At this point, the second beam-combining structure 120 may directly provide a light source for the multi-path parallel system 200.

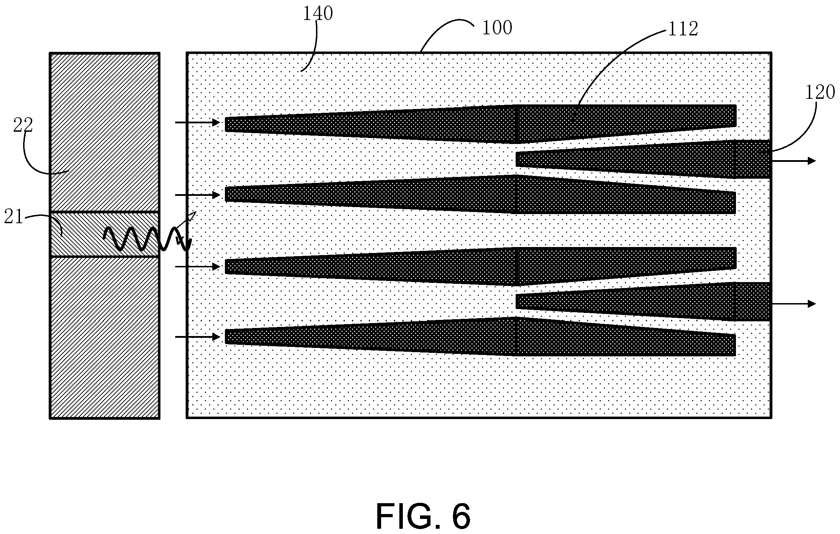

As an example, with reference to FIG. 6, the optical splitter device 100 includes four parallel second-type coupling structures 112 and two first beam-combining structures 120. The four second-type coupling structures 112 are arranged on both sides of the optical fiber core 21. The mode field formed by the four second-type coupling structures 112 together matches the optical fiber mode field, and the four second-type coupling structures 112 transmit the incident light together and divide the incident light into four beams with equal power. Further, the four light beams are combined into two beams with equal power by the two first beam-combining structures 120 to provide two light sources for the multi-path parallel system 200 (for example, provide two light sources for two electro-optic modulation devices 210). Herein, the high-intensity damage threshold of the optical chip is approximately 6dB higher than that of the conventional design.

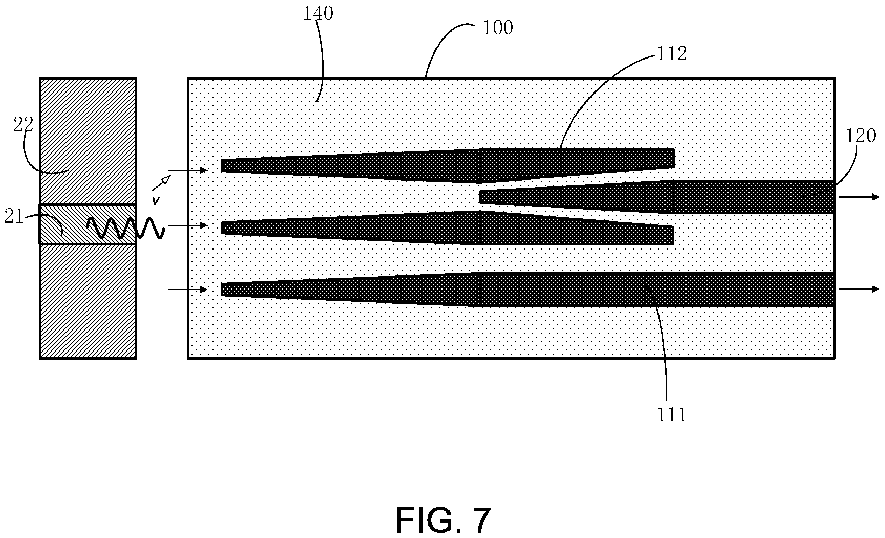

As an example, with reference to FIG. 7, the optical splitter device 100 includes three parallel edge coupling structures 110 (two second-type coupling structures 112 and one first-type coupling structure 111) and one first beam-combining structure 120. Among the three edge coupling structures 110, one second-type coupling structure 112 is opposite to the fiber core 21 of the optical fiber, and the other second-type coupling structure 112 and the first-type coupling structure 111 are located on both sides of the optical fiber core 21. The mode field formed by the three edge coupling structures 110 together matches the optical fiber mode field, and the three edge coupling structures 110 transmit the incident light together and divide the incident light into three beams with equal power. One beam on the first-type coupling structure 111 directly provides one light source for the multi-path parallel system 200 (for example, provides one light source for one electro-optic modulation device 210). After the two beams on the two second-type coupling structures 112 are combined by the first beam-combining structure 120, another light source is provided for the multi-path parallel system 200 (for example, one light source is provided for another electro-optic modulation device 210). Herein, the high-intensity damage threshold of the optical chip is approximately 4.77dB higher than that of the conventional design.

In an embodiment, the optical splitter device 100 further includes a second beam-combining structure 130. A first end of the second beam-combining structure 130 is located between two adjacent first beam-combining structures 120 to combine light sources emitted by the two adjacent first beam-combining structures 120. A second end of the second beam-combining structure 120 is used to connect to the multi-path parallel system to provide it with a beam-combined light source.

At this point, the light sources may be integrated to provide a light source for a multi-path parallel system that requires greater power.

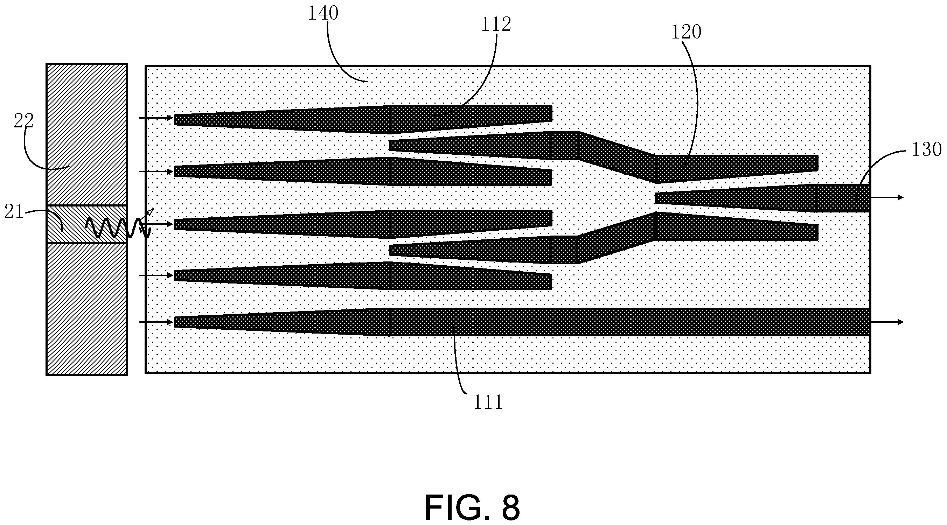

As an example, with reference to FIG. 8, the optical splitter device 100 includes five parallel edge coupling structures 110 (four second-type coupling structures 112 and one first-type coupling structure 111), two first beam-combining structures 120, and one second beam-combining structure 130. Among the five edge coupling structures 110, one second-type coupling structure 112 is opposite to the fiber core 21 of the optical fiber, and the other three second-type coupling structure 112 and the first-type coupling structure 111 are located on both sides of the optical fiber core 21. The mode field formed by the five edge coupling structures 110 together matches the optical fiber mode field, and the five edge coupling structures 110 transmit the incident light together and divide the incident light into five beams with equal power. One beam on the first-type coupling structure 111 directly provides one light source for the multi-path parallel system 200 (for example, provides one light source for one electro-optic modulation device 210). The four beams on the four second-type coupling structures 112 are combined by the two first beam-combining structures 120 to form two beams with equal power, and after the two light beams are combined by the second beam-combining structure 130, another light source is provided for the multi-path parallel system 200 (for example, one light source is provided for another electro-optic modulation device 210). Herein, the high-intensity damage threshold of the optical chip is approximately 6.99dB higher than that of the conventional design.

In an embodiment, the multiple edge coupling structures 110 include a third-type coupling structure 113.

The third-type coupling structure 113 includes a coupling portion 1131 and a beam-combining portion 1132. The coupling portion 1131 is used to form the mode field that matches the optical fiber mode field through joint action with other edge coupling structures 110. The beam-combining portion 1132 is located between two adjacent edge coupling structures 110 to perform beam combining and is used to connect to the multi-path parallel system.

At this point, when the optical splitter device 100 splits the incident light transmitted from the external optical fiber 20, the coupling portion 1131 of the third-type coupling structure 113 and other edge coupling structures 110 simultaneously split the incident light. At the same time, the third-type coupling structure 113 can combine its own split light with the two light beams on the two adjacent edge coupling structures 110 through the beam-combining portion 1132, so as to achieve the division of the incident light into multiple light sources with different powers according to the demand and output them to the multi-path light source. In this process, the third-type coupling structure 113 performs the coupling and beam combining functions at the same time. The power loss when allocating the light source according to the demand is thereby reduced.

It can be understood that in the embodiments of the application, the multiple edge coupling structures 110 may include only the third-type coupling structure 113, may include the third-type coupling structure 113 as well as the first-type coupling structure 111 or the second-type coupling structures 112, or may include all of the third-type coupling structure 113, the first-type coupling structure 111, and the second-type coupling structures 112.

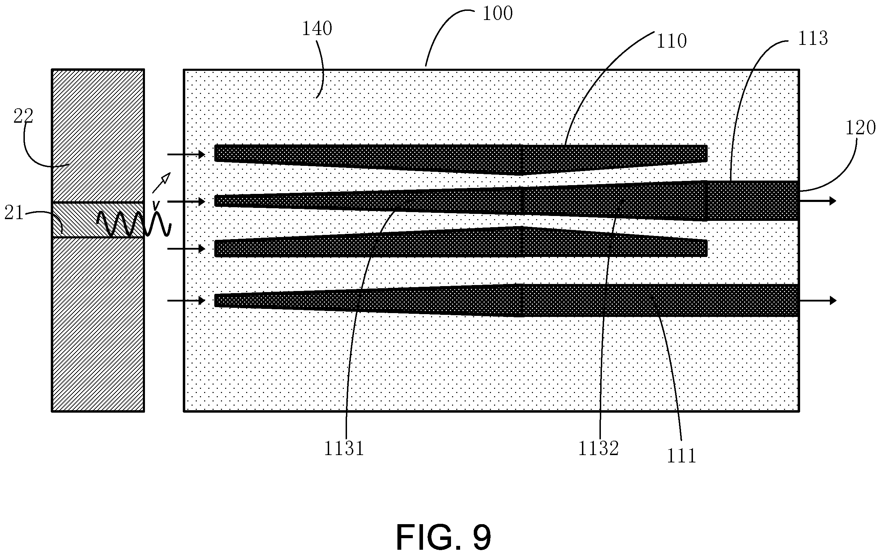

As an example, with reference to FIG. 9, the optical splitter device 100 includes four parallel edge coupling structures 110 (including one third-type coupling structure 112 and one first-type coupling structure 111). The four edge coupling structures 110 are arranged on both sides of the optical fiber core 21. The mode field formed by the four edge coupling structures 110 together matches the optical fiber mode field, and the four edge coupling structures 110 transmit the incident light together and divide the incident light into five beams with equal power. One beam on the first-type coupling structure 111 directly provides one light source for the multi-path parallel system 200 (for example, provides one light source for one electro-optic modulation device 210). The third-type coupling structure 113 combines its own light beam and the two light beams from the two adjacent edge coupling structures 110 to provide another light source for the multi-path parallel system 200 (for example, provides one light source for another electro-optic modulation device 210). Herein, the high-intensity damage threshold of the optical chip is approximately 6dB higher than that of the conventional design.

In the description of the specification, descriptions with reference to the terms such as "one embodiment", "other embodiments", etc. means that a particular feature, structure, material, or characteristic described in connection with the embodiment or example is included in at least one embodiment or example of the application. In the specification, the schematic description of the above-mentioned terms does not necessarily refer to the same embodiment or example.

The technical features of the above-described embodiments may be combined arbitrarily. In order to simplify the description, not all possible combinations of the technical features in the above embodiments are described. However, as long as there is no contradiction in the combinations of these technical features, these combinations should be considered to be within the scope of the description in this specification.

The abovementioned embodiments only represent several embodiments of the application, and the descriptions thereof are specific and detailed, but should not be construed as a limitation on the scope of the invention patent. It should be pointed out that for a person having ordinary skill in the art, without departing from the concept of the application, several modifications and improvements can be made, which all belong to the protection scope of the application. Therefore, the protection scope of the patent of the application should be subject to the appended claims.

## Claims

1. An optical splitter device used to provide a multi-path light source for a multi-path parallel system, **characterized in** comprising:
a plurality of edge coupling structures, a mode field formed by joint action of first ends of the edge coupling structures matching an optical fiber mode field, such that incident light transmitted by the optical fiber is split into a plurality of light sources, a second end of each of the edge coupling structures is used to connect to the multi-path parallel system to provide the light sources for the multi-path parallel system.

2. The optical splitter device according to claim 1, **characterized in that** the edge coupling structures comprise a first-type coupling structure, and a second end of the first-type coupling structure is used to directly connect to the multi-path parallel system.

3. The optical splitter device according to claim 1, **characterized in that** the edge coupling structures comprise second-type coupling structures, a first beam-combining structure is provided between adjacent two of the second-type coupling structures, and a first end of the first beam-combining structure is located between adjacent two of the second-type coupling structures and is used to combine light sources emitted from second ends of adjacent two of the second-type coupling structures.

4. The optical splitter device according to claim 3, **characterized in that** a second end of the first beam-combining structure is used to connect to the multi-path parallel system to provide the multi-path parallel system with a beam-combined light source.

5. The optical splitter device according to claim 3, **characterized in that** the optical splitter device further comprises a second beam-combining structure, a first end of the second beam-combining structure is located between adjacent two of the first beam-combining structures to combine light sources emitted by the two adjacent first beam-combining structures, and a second end of the second beam-combining structure is used to connect to the multi-path parallel system to provide the multi-path parallel system with a beam-combined light source.

6. The optical splitter device according to claim 1, **characterized in that** the edge coupling structures comprise a third-type coupling structure comprising a coupling portion and a beam-combining portion, the coupling portion is used to form the mode field that matches the optical fiber mode field through joint action with other edge coupling structures, and the beam-combining portion is located between adjacent two of the edge coupling structures to perform beam combining and is used to connect to the multi-path parallel system.

7. The optical splitter device according to claim 1, **characterized in that**
a number of the edge coupling structures is an even number, and the edge coupling structures are symmetrically arranged on both sides of a fiber core of the optical fiber, or
the number of the edge coupling structures is an odd number, one of the edge coupling structures is opposite to the fiber core of the optical fiber, and the remaining edge coupling structures are symmetrically arranged on both sides of the fiber core of the optical fiber.

8. The optical splitter device according to claim 7, **characterized in that** the edge coupling structures have same shapes and sizes and are arranged in parallel and at equal intervals.

9. An optical chip, **characterized in** comprising:
a multi-path parallel system; and
the optical splitter device according to claim 1.

10. An optical communication module, **characterized in** comprising:
a laser device used to emit laser;
an optical fiber connected to the laser device and used to transmit the laser emitted by the laser device; and
an optical chip comprising the optical splitter device according to claim 1.
